# EUROPEAN PATENT SPECIFICATION

(11) **EP 4 557 040 B1**
(45) Date of publication and mention of the grant of the patent: **04.03.2026**
(21) Application number: 24211740.6
(22) Date of filing: 08.11.2024
(51) Int. Cl.: G05D 16/20, F02M 21/02

(54) **ELECTRONICALLY CONTROLLED REGULATOR**
ELEKTRONISCH GESTEUERTER REGLER
RÉGULATEUR À COMMANDE ÉLECTRONIQUE

(30) Priority: 20.11.2023 JP 2023196987
(43) Date of publication of application: 21.05.2025
(73) Proprietor: Nikki Co., Ltd., Atsugi, Kanagawa 243-0801 (JP)
(72) Inventor: SUEMATSU, Yukinori, Atsugi-shi, 243-0801 (JP); AIZAWA, Shutaro, Atsugi-shi, 243-0801 (JP)
(74) Representative: Boult Wade Tennant LLP

(56) References cited:
- EP-A1- 3 273 186
- JP-B2- 6 231 404
- US-A1- 2016 146 159

## Description

### Technical Field

The present invention relates to a regulator that discharges a high-pressure fluid such as a gas fuel while depressurizing and regulating the fluid to a predetermined pressure, and in particular, to an electronically controlled regulator that regulates a pressure of the fluid to be discharged by electronic control.

### Background Art

As a regulator that depressurizes a high-pressure fluid to a predetermined pressure and delivers the depressurized fluid, for example, a gas fuel regulator described in JP 3594507 B2 is well known. The regulator includes a valve shaft coaxially disposed with a valve body and a doughnut-shaped seat portion having a seat face which has a center penetrated by a valve hole and is in close contact with the valve body. The regulator has a structure in which, in a case of a high-pressure fluid such as CNG flowing in from an inlet of a body of the regulator, the valve shaft disposed in a reciprocally slidable manner in an axial direction with the valve body in an open state of the valve body is biased by a pressure regulating spring with the valve body pressed down in close contact with the seat face with a predetermined pressure, and a high-pressure gas fuel is discharged while being depressurized and regulated to a predetermined pressure.

However, in such a conventional depressurization structure of the regulator, it is necessary to prepare the pressure regulating spring in advance for each specified discharge pressure, since a discharge pressure of the fluid due to the regulator mechanically depends on a load of the pressure regulating spring. Further, for a regulator used in a fuel supply system of a vehicle, since the pressure regulating spring is fixed to a specified set height in advance, there is a problem that a discharge pressure range and a flow rate range are mechanically limited because a pressure drop increases in a case where an engine required flow rate is large and the pressure drop decreases in a case where the required flow rate is small.

Meanwhile, JP S59-160842 U has proposed a pressure regulating mechanism including a stepping motor that is pulse-controlled in accordance with an output signal from a pressure sensor disposed in a primary-side diaphragm chamber as a biasing force adjusting unit for adjusting a biasing force of a pressure regulating spring in the primary-side diaphragm chamber in an LPG regulator including the primary-side diaphragm chamber and a secondary-side diaphragm chamber.

Accordingly, with the pressure regulating mechanism including the electronically controlled stepping motor, it is possible to maintain a pressure in the primary-side diaphragm chamber at a desired pressure, by weakening the biasing force of the pressure regulating spring in a case where the pressure in the primary-side diaphragm chamber becomes higher than a preset pressure, and strengthening the biasing force of the pressure regulating spring in a case where the pressure in the primary-side diaphragm chamber becomes lower than the preset pressure.

However, only an inner portion of the primary-side diaphragm chamber can be adjusted to and maintained at a desired pressure by the electronically controlled regulator, and a pressure of a fuel discharged from the secondary-side diaphragm chamber depends on the pressure regulating spring arranged in the chamber. Therefore, it is still difficult to set various discharge pressures by one type of regulator, and the problem that the discharge pressure range and the flow rate range are mechanically limited has not been solved.

Therefore, the inventors and applicants of the present application have previously proposed a regulator that electronically controls an electric motor as shown in FIG. 5 in Japanese Patent Application No. 2022-088066. An electronically controlled regulator 1C includes, inside a columnar body 10C, a high-pressure fluid chamber 2C including from an introduction port of a fluid introduction path 11 for introducing a high-pressure fluid to a valve portion of a pressure regulating valve 20C, a discharge pressure chamber 3C including from the valve portion to a discharge port of a fluid delivery path 12 for discharging a depressurized fluid, and a pressure regulating portion 4C as a discharge pressure regulating unit for depressurizing and regulating a pressure of the fluid to be discharged while operating the pressure regulating valve 20C to a predetermined pressure.

Further, the discharge pressure regulating unit constitutes a valve shaft moving structure that moves a cylindrical valve shaft 21C in the axial direction while operating by driving of an electric motor 30C to change a distance between a valve body 22C and a valve seat 23C, and opens and closes the pressure regulating valve 20C to maintain a pressure of the depressurized fluid at a set pressure while operating the valve shaft moving structure by the electric motor 30C based on a value of a pressure sensor that detects the pressure of the depressurized fluid.

As described above, a manner is adopted to maintain a set discharge pressure through an opening and closing operation of the valve body 22C disposed on the valve shaft 21C while driving and controlling the electric motor 30C based on a discharge pressure detected by the sensor without regulating the discharge pressure only by a spring 25C disposed on the distal end side of the valve shaft 21C. Thus, a function of automatically maintaining the set various discharge pressures while flexibly responding to the fluctuation of the required flow rate is exhibited.

However, in such an electronically controlled regulator 1C, during valve closing when energization of the electric motor 30C is stopped such as when an engine is stopped, a load for operating the valve body 22C in a closing direction becomes only the biasing force of the spring 25C disposed on the valve shaft 21C, and a pressing force to the seat face 24C of the valve seat 23C is reduced. Therefore, there is a problem that slow leakage is likely to occur from that portion. Further, in a case where a relationship of an outer peripheral seal diameter (Dp) of the valve shaft 21C being smaller than a seat diameter (Ds) of the valve seat 23C is satisfied, if the slow leakage occurs on the discharge pressure chamber 3C side via the pressure regulating valve 20C, the load acting in a valve opening direction increases, and the fluid is more likely to leak.

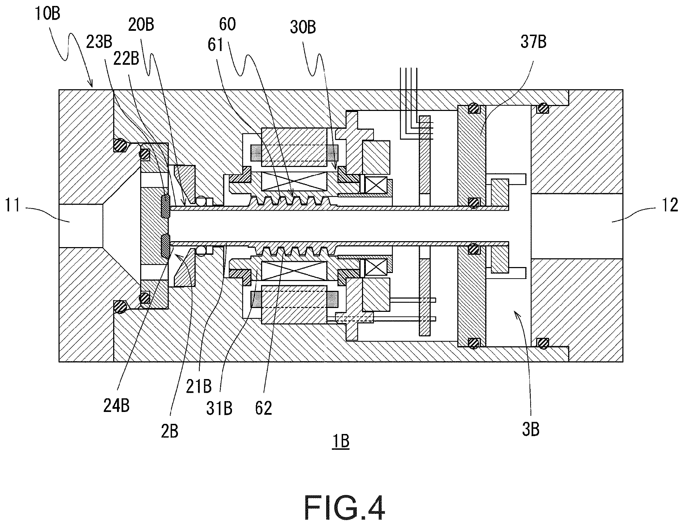

Therefore, the inventors and applicants of the present application have proposed, in Japanese Patent Application No. 2023-087018, in addition to the configuration of the electronically controlled regulator 1C described above, an electronically controlled regulator 1B in which a fluid pressure received by a piston 37B is converted into a pressure load in a direction of pressing a valve body 22B against a seat face 24B of a valve seat 23B at the time of closing the valve when the driving of an electric motor 30B is stopped, as a cylindrical space is formed on a discharge pressure chamber 3B side as illustrated in FIG. 4, and the piston 37B receiving the fluid pressure in the discharge pressure chamber 3B is slidably arranged in the space together with a valve shaft 21B in a state of being fixed to the outer peripheral side of the valve shaft 21B, and the above-described slow leakage can be reduced.

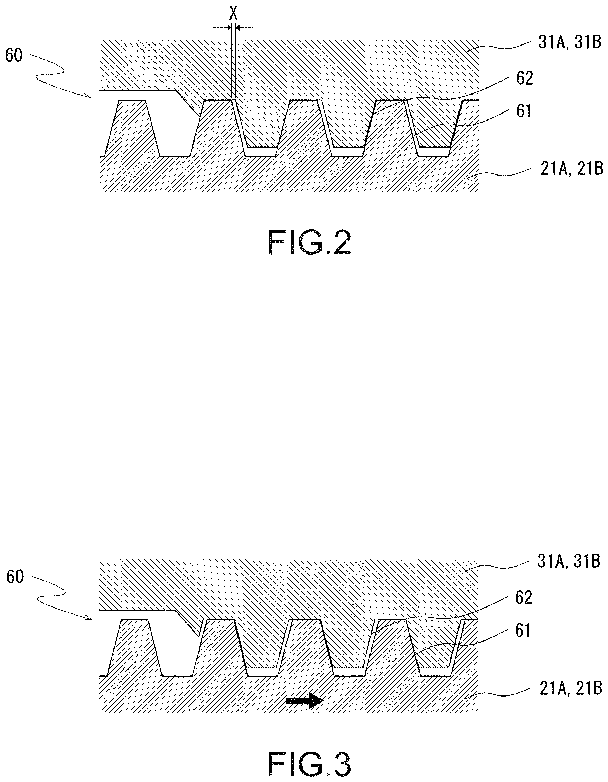

However, also in the electronically controlled regulator 1B, in order to prevent galling when a trapezoidal male screw 61 provided on the outer peripheral surface of the valve shaft 21B and a trapezoidal female screw 62 provided on the inner peripheral surface of a rotor 31B, constituting a feed screw 60 of the valve shaft moving structure, mesh with each other, a backlash X (play) is provided between the screw threads as illustrated in FIG. 2 in which the feed screw 60 portion is enlarged. At the time of pressure adjustment, the valve shaft 21B and the valve body 22B shift by the backlash X as illustrated in FIG. 3 according to the pressure balance between a high-pressure fuel chamber 2B at the fuel inlet and a low-pressure fuel chamber 3B on the discharge side, and as a result of this change in the opening area, there is a problem that the discharge pressure suddenly fluctuates.

EP 3 273 186 A1 discloses, according to its abstract, a motor-operated valve in which the rotational motion of a rotor is converted into a linear motion by screw threading between a male screw member and a female screw member, and a valve element housed in a valve body is moved in an axial direction based on this linear motion, and a back pressure chamber is provided above the valve element to introduce a pressure in a valve port to the back pressure chamber, including an urging spring for urging the male screw member, and having a configuration in which a surface of one side of a thread formed on the male screw member urged by the urging spring is in contact with a surface on an other side of a thread formed on the female screw member.

US 2016/146159 A1 discloses, according to its abstract, a flow rate control valve which includes: a valve casing forming a fluid passage; a valve seat provided in the fluid passage; a stepping motor; a valve guide stroke-controlled by the stepping motor via a feed screw mechanism; a valve body configured to be placed and separated on and from the valve seat; a connector connecting the valve guide and the valve body so as to allow them to move in an axial direction within a predetermined range; a valve spring biasing the valve body in a closing direction.

JP 6 231 404 B2 discloses, according to its abstract, a valve seat; a valve body that can be sat on the valve seat; a valve shaft reciprocating the valve body in a right angle direction in respect to the valve seat; a screw mechanism having a backlash for reciprocating the valve shaft; a stepping motor for driving the screw mechanism; and a return spring for energizing the valve body in a closing direction.

### Summary of Invention

### Technical Problem

The present invention is to solve the above problems, and an object of the present invention is to provide an electronically controlled regulator capable of preventing occurrence of slow leakage via a pressure regulating valve when a valve is closed and avoiding fluctuation in discharge pressure caused by backlash provided in a valve shaft moving structure.

### Solution to Problem

An electronically controlled regulator is provided according to claim 1.

As described above, by providing the piston that prevents slow leakage while receiving the fluid pressure in the discharge pressure chamber and pressing the valve body against the seat face when the electric motor is stopped, and providing the spring that constantly biases the piston and the valve shaft in the valve closing direction on the discharge pressure chamber side, the positional deviation corresponding to the backlash provided in the valve shaft moving structure between the electric motor and the valve shaft does not occur in the valve shaft, so that it is possible to effectively avoid the sudden fluctuation of the discharge pressure generated by changing the valve opening area due to the positional deviation of the valve shaft according to the pressure balance between a high-pressure fuel chamber and a low-pressure fuel chamber.

In addition, in this electronically controlled regulator, the electric motor is an AC servomotor or a DC brushless motor, and the valve shaft moving structure is a feed screw formed by a combination of a trapezoidal male screw formed on an outer peripheral surface of a motion shaft having a columnar shape coaxially attached to the valve shaft and a trapezoidal female screw formed on the inner peripheral surface of the rotor and meshing with the trapezoidal male screw, and when the trapezoidal female screw rotates around the trapezoidal male screw by driving the electric motor to move the valve shaft while operating the trapezoidal male screw in the axial direction without rotating the trapezoidal male screw, the valve shaft can be moved to a valve opening position or a valve closing position in a short time without excessively enlarging the body and can be accurately stopped.

Furthermore, in the electronically controlled regulator described above, the valve shaft is formed of a cylindrical member in which an annular valve body is coaxially provided and which has a passage through which a fluid can pass, and when the valve body on a distal end side is operated by the discharge pressure regulating unit so as to change the distance to the seat face of the valve seat to adjust the discharge pressure of the fluid, the above-described function can be reliably exerted with a relatively simple configuration.

### Advantageous Effects of Invention

According to the present invention in which the piston that presses the valve body against the seat face when the electric motor is stopped is constantly biased in the valve closing direction by the spring, it is possible to prevent the occurrence of slow leakage via the pressure regulating valve when the motor is stopped and to avoid the fluctuation of the discharge pressure derived from the backlash provided in the valve shaft moving structure.

### Brief Description of Drawings

FIG. 1 is a longitudinal sectional view illustrating an electronically controlled regulator according to an embodiment of the present invention;
FIG. 2 is an enlarged partial view illustrating a backlash provided in a feed screw of the electronically controlled regulator in FIGS. 1 and 4;
FIG. 3 is an enlarged partial view illustrating a state in which a valve shaft is moved in a valve opening direction (black arrow direction) for the backlash in FIG. 2;
FIG. 4 is a longitudinal sectional view illustrating an electronically controlled regulator of a conventional example; and

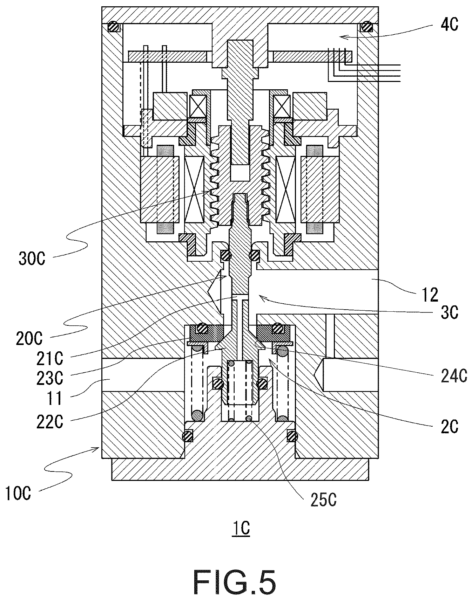

FIG. 5 is a longitudinal sectional view illustrating an electronically controlled regulator of another conventional example.

### Description of Embodiments

Hereinafter, an embodiment of the present invention will be described with reference to the drawings.

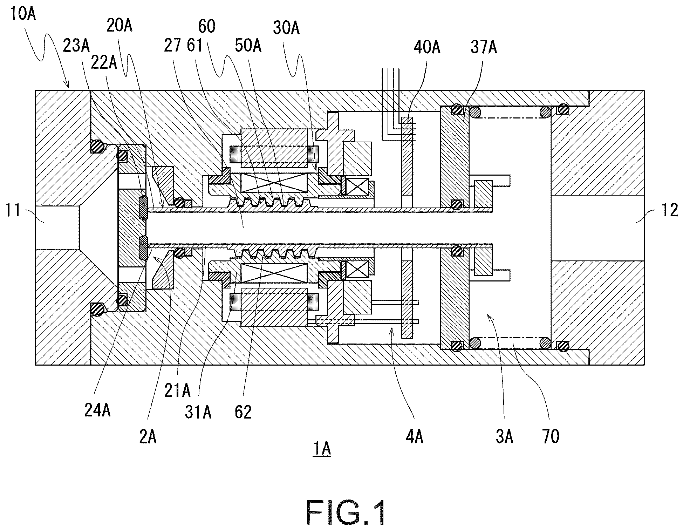

FIG. 1 illustrates a valve closed state of an electronically controlled regulator 1A according to an embodiment of the present invention. The electronically controlled regulator 1A is assumed to be used as a depressurizing unit that delivers a gas fuel or the like which is a high-pressure fluid, while depressurizing the gas fuel to a predetermined pressure mainly in a supply system for the gas fuel or the like.

A configuration of the electronically controlled regulator will be roughly described. A body 10A made of metal and formed in a columnar shape includes a high-pressure fluid chamber 2A constituting a high-pressure portion from an introduction port of a fluid introduction path 11 for introducing a high-pressure fluid to a valve portion of a pressure regulating valve 20A, a discharge pressure chamber 3A constituting a discharge pressure portion from a valve portion of the pressure regulating valve 20A to a discharge port of a fluid delivery path 12 for discharging the depressurized and regulated fluid, and a pressure control unit 4A including a discharge pressure regulating unit for regulating and maintaining a pressure of the fluid to be discharged.

The pressure regulating valve 20A includes a valve shaft 21A in which an annular valve body 22A is coaxially provided and which is formed of a cylindrical member which has a passage 27 through which a fluid can pass and arranged to be able to reciprocate in the axial direction, a doughnut-shaped valve seat 23A that has a seat face 24A capable of being in close contact with the valve body 22A, in which a valve hole is formed at the center, and a discharge pressure regulating unit that regulates a discharge pressure by causing the valve shaft 21A to reciprocate to change a distance between the valve body 22A and the valve seat 23A.

The discharge pressure regulating unit includes an electric motor 30A including a rotor 31A, a driver 40A that drives and controls the electric motor, and a drive shaft 50A coaxially connected to the valve shaft 21A. The discharge pressure regulating unit drives the valve body 22A on the distal end side of the valve shaft 21A by the electric motor 30A electronically controlled with respect to the seat face 24A of the valve seat 23A, and automatically adjusts the pressure of the depressurized fluid to be discharged to be equal to a set pressure while reciprocating and sliding the valve shaft in an axial direction between a valve closing position where the valve body 22A and the seat face 24A are in close contact with each other and a valve opening position where the valve body 22A and the seat face 24A are separated from each other to change an opening area through a valve shaft moving structure by a feed screw 60 provided between an outer peripheral surface of the valve shaft 21A and an inner peripheral surface of the rotor 31A.

That is, a manner of regulating and maintaining the discharge pressure at a set discharge pressure by performing opening and closing of the valve body 22A provided on the valve shaft 21A and adjustment of the valve opening position while driving and controlling the electric motor 30A based on data of the discharge pressure detected by the pressure sensor (not illustrated) is adopted, and it is possible to automatically maintain the various set discharge pressures while flexibly responding to the fluctuation of the required flow rate. The electric motor 30A is preferably an AC servomotor or a DC brushless motor from the viewpoint of adjustability.

In the electronically controlled regulator 1A of the present embodiment, a cylindrical space is formed in the discharge pressure chamber 3A on the proximal end side of the valve shaft 21A in the body 10A, and the piston 37A that receives the fluid pressure in the discharge pressure chamber 3A is slidably disposed in the space together with the valve shaft 21A in a state of being fixed to the outer peripheral side of the valve shaft 21A.

As a result, when the electric motor 30A is stopped and the valve is closed, the fluid pressure on the discharge pressure chamber 3A side received by the piston 37A is converted into a pressure load in a direction of pressing the valve body 22A against the seat face 24A, so that it is possible to prevent occurrence of a slow leakage via the pressure regulating valve 20A caused by a decrease in the pressing force of the valve seat 23A against the seat face 24A.

On the other hand, in the above-described conventional electronically controlled regulator 1B, since the feed screw 60 constituting the valve shaft moving structure is provided with the backlash (play) X between the screw threads so that galling does not occur when the trapezoidal female screw 62 and the trapezoidal male screw 61 are meshed with each other as illustrated in FIG. 2, there is a problem that the pressure regulating valve 20B is moved by the backlash X in accordance with the pressure balance between the high-pressure fluid chamber 2B and the discharge pressure chamber 3B at the time of pressure regulation, and the valve opening area is changed, causing sudden fluctuation in the discharge pressure. The same problem is assumed in the electronically controlled regulator 1A of the present embodiment, similarly since the feed screw 60 is provided with the backlash.

Therefore, in the present embodiment, in the space on the discharge pressure chamber 3A side where the piston 37A is disposed, the spring 70 is disposed in a compressed state so as to constantly bias the valve shaft 21A in the valve closing direction while bringing the distal end side into contact with the pressure receiving surface side of the piston 37A, and this is a feature of the present invention.

As a result, the biasing force of the spring 70 is applied to the piston 37A, so that the trapezoidal female screw 62 and the trapezoidal male screw 61 constituting the feed screw 60 do not shift in the axial direction from the state of being constantly in close contact with each other, and the valve shaft 21A can be prevented from causing positional deviation by the backlash X previously provided to the feed screw 60, so that it is possible to avoid a sudden fluctuation in the discharge pressure caused according to the pressure balance between the high-pressure fluid chamber 2A and the discharge pressure chamber 3A.

As described above, regarding the electronically controlled regulator, according to the present invention, it is possible to prevent occurrence of slow leakage via the pressure regulating valve when the valve is closed, and to avoid fluctuation of the discharge pressure derived from a backlash provided in the valve shaft moving structure.

### Reference Signs List

- 1A: Electronically controlled regulator
- 2A: High-pressure fluid chamber
- 3A: Discharge pressure chamber
- 4A: Pressure control unit
- 10A: Body
- 11: Fluid introduction path
- 12: Fluid delivery path
- 20A: Pressure regulating valve
- 21A: Valve shaft
- 22A: Valve body
- 23A: Valve seat
- 24A: Seat face
- 27: Passage
- 30A: Electric motor
- 31A: Rotor
- 37A: Piston
- 40A: Driver
- 50A: Drive shaft
- 60: Feed screw
- 61: Trapezoidal male screw
- 62: Trapezoidal female screw
- 70: Spring

## Claims

1. An electronically controlled regulator (1A) comprising, inside a body (10A) formed with an introduction port and a discharge port,
a pressure regulating valve (20A) including:
a valve shaft (21A) in which a valve body (22A) is coaxially provided and capable of reciprocating in an axial direction;
a valve seat (23A) having a seat face (24A) with which the valve body (22A) can be brought into close contact on a high-pressure fluid chamber (2A) side following the introduction port; and
a discharge pressure regulating unit that adjusts a pressure of a fluid by changing a distance between the valve body (22A) and the valve seat (23A) while driving an electronically controlled electric motor (30A) to reciprocate the valve shaft (21A) by a valve shaft moving structure including a feed screw (60) provided between an outer peripheral surface of the valve shaft (21A) and an inner peripheral surface of a rotor (31A),
in which the electronically controlled regulator (1A) discharges a high-pressure fluid introduced from the introduction port into the high-pressure fluid chamber (2A) from the discharge port as a pressure-reducing fluid having a set pressure on a discharge pressure chamber (3A) side while depressurizing and adjusting the high-pressure fluid by the pressure regulating valve (20A),
**characterised in that**:
the valve shaft (21A) is formed of a cylindrical member in which an annular valve body (22A) is coaxially provided and which has a passage (27) through which a fluid can pass, and a discharge pressure of the fluid is adjusted by operating the valve body (22A) on a distal end side by the discharge pressure regulating unit so as to change the distance between the valve body (22A) and the seat face (24A); and
a cylindrical space is formed in the discharge pressure chamber (3A) and a piston (37A) that receives fluid pressure in the discharge pressure chamber (3A) is slidably disposed in the cylindrical space together with the valve shaft (21A) in a state where the piston (37A) is fixed to an outer peripheral side of the valve shaft (21A); a spring (70) that constantly biases the valve shaft (21A) in a valve closing direction while bringing a distal end side into contact with the piston (37A) is disposed in the cylindrical space; a fluid pressure received by the piston (37A) is converted into a pressure load in a direction of pressing the valve body (22A) against the seat face (24A) at the time of closing the valve when the electric motor (30A) is stopped; and occurrence of a positional deviation of the valve shaft (21A) due to a backlash provided in a meshing portion of the feed screw (60) is avoided by a biasing force of the spring (70) at the time of pressure regulation.

2. The electronically controlled regulator (1A) according to claim 1, wherein the electric motor (30A) is an AC servomotor or a DC brushless motor, the valve shaft moving structure is the feed screw (60) formed by a combination of a trapezoidal male screw (61) formed on the outer peripheral surface of a columnar motion shaft (50A) coaxially attached to the valve shaft (21A) and a trapezoidal female screw (62) formed on the inner peripheral surface of the rotor (31A) and meshing with the trapezoidal male screw (61), and the trapezoidal female screw (62) rotates around the trapezoidal male screw (61) by driving of the electric motor (30A) to move the valve shaft (21A) while operating the trapezoidal male screw (61) in the axial direction without rotating the trapezoidal male screw (61).

## Patentansprüche

1. Elektronisch gesteuerter Regler (1A), welcher in einem Körper (10A), welcher mit einer Einlassöffnung und einer Auslassöffnung gebildet ist, umfasst
ein Druckregelventil (20A), umfassend:
eine Ventilwelle (21A), in welcher ein Ventilkörper (2A) koaxial bereitgestellt ist und welche in der Lage ist, sich in einer axialen Richtung hin- und herzubewegen;
einen Ventilsitz (23A), welcher eine Sitzfläche (24A) aufweist, mit welcher der Ventilkörper (22A) an einer Hochdruckfluidkammer-(2A) Seite der Einlassöffnung folgend in engen Kontakt gebracht werden kann; und
eine Auslassdruckregeleinheit, welche einen Druck eines Fluids durch Ändern eines Abstands zwischen dem Ventilkörper (22A) und dem Ventilsitz (23A) anpasst, während ein elektronisch gesteuerter Elektromotor (30A) angetrieben wird, um die Ventilwelle (21A) durch eine Ventilwellen-Bewegungsstruktur hin- und herzubewegen, welche eine Zuführschnecke (60) umfasst, welche zwischen einer Außenumfangsfläche der Ventilwelle (21A) und einer Innenumfangsfläche eines Rotors (31A) bereitgestellt ist,
wobei der elektronisch gesteuerte Regler (1A) ein Hochdruckfluid, welches von der Einlassöffnung in die Hochdruckfluidkammer (2A) eingelassen wird, aus der Auslassöffnung als ein druckreduzierendes Fluid, welches einen festgelegten Druck an einer Auslassdruckkammer-(3A) Seite aufweist, abführt, während das Hochdruckfluid durch das Druckregelventil (20A) druckentlastet und angepasst wird,
**dadurch gekennzeichnet, dass**:
die Ventilwelle (21A) aus einem zylindrischen Element gebildet ist, in welchem ein ringförmiger Ventilkörper (22A) koaxial bereitgestellt ist und welches einen Durchgang (27) aufweist, durch welchen ein Fluid passieren kann, und ein Auslassdruck des Fluids durch Betätigen des Ventilkörpers (22A) an einer distalen Endseite durch die Auslassdruckregeleinheit angepasst wird, um den Abstand zwischen dem Ventilkörper (22A) und der Sitzfläche (24A) zu verändern; und
ein zylindrischer Raum in der Auslassdruckkammer (3A) gebildet ist und ein Kolben (37A), welcher den Fluiddruck in der Auslassdruckkammer (3A) aufnimmt, zusammen mit der Ventilwelle (21A) in einem Zustand, in welchem der Kolben (37A) an einer Außenumfangsseite der Ventilwelle (21A) befestigt ist, in dem zylindrischen Raum verschiebbar angeordnet ist; eine Feder (70), welche die Ventilwelle (21A) konstant in eine Ventilschließrichtung vorspannt, während sie eine distale Endseite mit dem Kolben (37A) in Kontakt bringt, in dem zylindrischen Raum angeordnet ist;
ein Fluiddruck, welcher von dem Kolben (37A) aufgenommen wird, in eine Druckbelastung in einer Richtung umgewandelt wird, in welcher der Ventilkörper (22A) gegen die Sitzfläche (24A) gedrückt wird, zu dem Zeitpunkt eines Schließens des Ventils, wenn der Elektromotor (30A) angehalten wird; und ein Auftreten einer Positionsabweichung der Ventilwelle (21A) aufgrund eines in einem Eingriffsabschnitt der Zuführschnecke (60) vorgesehenen Spiels durch eine Vorspannkraft der Feder (70) zu dem Zeitpunkt einer Druckregelung vermieden wird.

2. Elektronisch gesteuerter Regler (1A) nach Anspruch 1, wobei der Elektromotor (30A) ein Wechselstrom-Servomotor oder ein bürstenloser Gleichstrommotor ist, wobei die Ventilwellen-Bewegungsstruktur die Zuführschnecke (60) ist, welche durch eine Kombination aus einer trapezförmigen Außenschnecke (61), welche an der Außenumfangsfläche einer säulenförmigen Bewegungswelle (50A) ausgebildet ist, welche koaxial an der Ventilwelle (21A) angebracht ist, und einer trapezförmigen Innenschnecke (62) gebildet ist, welche an der Innenumfangsfläche des Rotors (31A) gebildet ist und mit der trapezförmigen Außenschnecke (61) in Eingriff steht, und wobei die trapezförmige Innenschnecke (62) um die trapezförmige Außenschnecke (61) durch Antrieben des Elektromotors (30A) rotiert, um die Ventilwelle (21A) zu bewegen, während die trapezförmige Außengewindeschnecke (61) in der axialen Richtung betätigt wird, ohne die trapezförmige Außengewindeschnecke (61) zu rotieren.

## Revendications

1. Régulateur à commande électronique (1A) comprenant, à l'intérieur d'un corps (10A) formé avec un orifice d'introduction et un orifice de décharge,
une vanne de régulation de pression (20A) comprenant :
un arbre de vanne (21A) dans lequel un corps de vanne (22A) est disposé coaxialement et capable d'effectuer un mouvement de va-et-vient dans une direction axiale ;
un siège de vanne (23A) présentant une face de siège (24A) avec laquelle le corps de vanne (22A) peut être amené en contact étroit sur un côté de chambre de fluide haute pression (2A) à la suite de l'orifice d'introduction ; et
une unité de régulation de pression de décharge qui ajuste une pression d'un fluide en modifiant une distance entre le corps de vanne (22A) et le siège de vanne (23A) tout en entraînant un moteur électrique à commande électronique (30A) pour déplacer en va-et-vient l'arbre de vanne (21A) par l'intermédiaire d'une structure de déplacement d'arbre de vanne comprenant une vis d'alimentation (60) prévue entre une surface périphérique extérieure de l'arbre de vanne (21A) et une surface périphérique intérieure d'un rotor (31A),
dans lequel le régulateur à commande électronique (1A) décharge un fluide haute pression introduit à partir de l'orifice d'introduction dans la chambre de fluide haute pression (2A) à partir de l'orifice de décharge en tant que fluide de réduction de pression présentant une pression définie sur un côté de la chambre de pression de décharge (3A) tout en dépressurisant et en ajustant le fluide haute pression par l'intermédiaire de la vanne de régulation de pression (20A),
**caractérisé en ce que** :
l'arbre de vanne (21A) est formé d'un élément cylindrique dans lequel un corps de vanne annulaire (22A) est prévu coaxialement, et qui présente un passage (27) à travers lequel un fluide peut passer, et une pression de décharge du fluide est ajustée en actionnant le corps de vanne (22A) sur un côté d'extrémité distale par l'intermédiaire de l'unité de régulation de pression d'évacuation de manière à modifier la distance entre le corps de vanne (22A) et la face de siège (24A) ; et
un espace cylindrique est formé dans la chambre de pression de décharge (3A) et un piston (37A) qui reçoit une pression de fluide dans la chambre de pression de décharge (3A) est disposé de manière coulissante dans l'espace cylindrique avec l'arbre de vanne (21A) dans un état dans lequel le piston (37A) est fixé à un côté périphérique extérieur de l'arbre de vanne (21A) ; un ressort (70) qui sollicite constamment l'arbre de vanne (21A) dans une direction de fermeture de vanne tout en amenant un côté d'extrémité distale en contact avec le piston (37A) est disposé dans l'espace cylindrique ; une pression de fluide reçue par le piston (37A) est convertie en une charge de pression dans une direction de pression du corps de vanne (22A) contre la face de siège (24A) au moment de la fermeture de la vanne lorsque le moteur électrique (30A) est arrêté ; et l'apparition d'une déviation de position de l'arbre de vanne (21A) due à un jeu prévu dans une partie d'engrènement de la vis d'alimentation (60) est évitée par l'intermédiaire d'une force de sollicitation du ressort (70) au moment de la régulation de pression.

2. Régulateur à commande électronique (1A) selon la revendication 1, dans lequel le moteur électrique (30A) est un servomoteur à courant alternatif ou un moteur sans balai à courant continu, la structure de déplacement d'arbre de vanne est la vis d'alimentation (60) formée par une combinaison d'une vis mâle trapézoïdale (61) formée sur la surface périphérique extérieure d'un arbre de mouvement en colonne (50A) fixé de manière coaxiale à l'arbre de vanne (21A) et d'une vis femelle trapézoïdale (62) formée sur la surface périphérique intérieure du rotor (31A) et engrenant avec la vis mâle trapézoïdale (61), et la vis femelle trapézoïdale (62) tourne autour de la vis mâle trapézoïdale (61) en entraînant le moteur électrique (30A) pour déplacer l'arbre de vanne (21A) tout en actionnant la vis mâle trapézoïdale (61) dans la direction axiale sans faire tourner la vis mâle trapézoïdale (61).
